# EUROPÄISCHE PATENTSCHRIFT

(11) **EP 2 391 671 B1**
(45) Veröffentlichungstag und Bekanntmachung des Hinweises auf die Patenterteilung: **01.05.2013**
(21) Anmeldenummer: 10701202.3
(22) Anmeldetag: 16.01.2010
(51) Int. Cl.: B82Y 30/00

(54) **Verfahren zum Einbringen von Kohlenstoffteilchen in eine Polyurethan-Oberflächenschicht**
Method for inserting carbon particles into a polyurethane surface layer
Procédé d'introduction de particules de carbone dans une couche de surface en polyuréthane

(30) Priorität: 30.01.2009 EP 09001308
(43) Veröffentlichungstag der Anmeldung: 07.12.2011
(73) Patentinhaber: Bayer MaterialScience AG, 51368 Leverkusen (DE)
(72) Erfinder: VOGEL, Stephanie, 40764 Langenfeld (DE)
(74) Vertreter: BIP Patents
(86) Internationale Anmeldenummer: PCT/EP2010/000220
(87) Internationale Veröffentlichungsnummer: WO 2010/086094

(56) Entgegenhaltungen:
- EP-A- 0 786 422
- WO-A-2007/010517
- BLIZNYUK VALERY ET AL: "Surface electrical conductivity in ultrathin single-wall carbon nanotube/polymer nanocomposite films" APPLIED PHYSICS LETTERS, AIP, AMERICAN INSTITUTE OF PHYSICS, MELVILLE, NY, US, Bd. 88, Nr. 16, 17. April 2006 (2006-04-17), Seiten 164101-164101, XP012081256 ISSN: 0003-6951
- FOSTER J ET AL: "Dispersion and phase separation of carbon nanotubes in ultrathin polymer films" JOURNAL OF COLLOID AND INTERFACE SCIENCE, ACADEMIC PRESS, NEW YORK, NY, US, Bd. 287, Nr. 1, 1. Juli 2005 (2005-07-01), Seiten 167-172, XP004902691 ISSN: 0021-9797

## Beschreibung

Die vorliegende Erfindung betrifft ein Verfahren zum Einbringen von elektrisch leitfähigen Kohlenstoffteilchen in eine Polyurethan umfassende Oberflächenschicht. Diese Kohlenstoffteilchen können insbesondere Kohlenstoff-Nanoröhren sein. Sie betrifft weiterhin eine Polyurethan-Schicht, welche elektrisch leitfähige Kohlenstoffteilchen umfasst und durch ein erfindungsgemäßes Verfahren erhältlich ist. Weiterhin betrifft die Erfindung einen Polyurethan-Gegenstand mit einer durch ein erfindungsgemäßes Verfahren erhältlichen, elektrisch leitfähige Kohlenstoffteilchen umfassenden Oberflächenschicht.

Kohlenstoffnanoröhren (carbon nanotubes, CNTs) sind für ihre außergewöhnlichen Eigenschaften bekannt. So beträgt beispielsweise deren Festigkeit das ungefähr 100-fache des Stahls, deren thermische Leitfähigkeit ist etwa doppelt so groß wie die von Diamant, ihre thermische Stabilität reicht bis hoch zu 2800 °C im Vakuum und deren elektrische Leitfähigkeit kann ein Vielfaches der Leitfähigkeit von Kupfer betragen. Diese strukturbedingten Charakteristika sind auf molekularer Ebene allerdings nur dann zugänglich, wenn es gelingt, Kohlenstoffhanoröhren homogen zu verteilen und einen möglichst großen Kontakt zwischen den Röhren und dem Medium herzustellen, also diese mit dem Medium verträglich und somit stabil dispergierbar zu machen. Hinsichtlich elektrischer Leitfähigkeit ist es weiterhin erforderlich, ein homogenes Netzwerk an Röhren auszubilden, in dem sich diese im Idealfall nur an den Enden berühren. Hierbei sollten die Kohlenstoffnanoröhren möglichst vereinzelt, das heißt agglomeratfrei, nicht ausgerichtet und in einer Konzentration vorliegen, bei der sich ein solches Netzwerk gerade eben ausbilden kann, was sich durch den sprunghaften Anstieg der elektrischen Leitfähigkeit in Abhängigkeit von der Konzentration an Kohlenstoffnanoröhren widerspiegelt (Perkolationsgrenze).

Für technische Anwendungen ist daher die Einarbeitung von solchen Partikeln in Polymermatrices interessant. Zwei Aspekte müssen für eine erfolgreiche Verarbeitung von Kohlenstoffnanoröhren, wenn man durch ihre Nutzung einen Werkstoff beispielsweise elektrisch leitfähig machen möchte, berücksichtigt werden: das vollständige Aufbrechen und Entbündeln von Kohlenstoffnanoröhren-Agglomeraten und die Unterdrückung der großen Neigung von Kohlenstoffnanoröhren zur Reagglomeration (in ein und demselben Medium während des Alterungsprozesses oder während der Verarbeitung einer solchen Dispersion zum fertigen Werkstoff). Diese Schwierigkeiten bei der Kohlenstoffnanoröhren-Verarbeitung fußen auf den hydrophoben Charakter der Kohlenstoffnanoröhren-Oberfläche und das hohe Aspektverhältnis dieser quasi eindimensionalen Struktur.

Soll nun vermieden werden, dass Kohlenstoffnanoröhren in der Form von Bündeln und/oder Agglomeraten ein energetisches Minimum finden, muss ihre Verträglichkeit mit dem sie umgebenden Medium erhöht werden. Hierbei ist allerdings zu beachten, dass eine chemische, kovalente Funktionalisierung von Kohlenstoffnanoröhren ihre Verträglichkeit mit dem Medium zwar verbessern kann. Dies äußert sich zum Beispiel in einer erhöhten (thermischen) Langzeitstabilität und dem Ausbleiben von Reagglomeration während beispielsweise der Polyurethan-Herstellung. Allerdings wird durch diese Oberflächenmodifikation auch das delokalisierte π-Elektronensystem der Röhre unterbrochen und somit die elektrische Leitfähigkeit jeder einzelnen Röhre in Abhängigkeit des Funktionalisierungsgrades eeniedrigt.

Die nicht kovalente Funktionalisierung von Kohlenstoffnanoröhren durch beispielsweise Dispergieradditive stellt eine Alternative zur chemischen, kovalenten Modifikation und Verträglichmachung der Röhre mit dem Medium dar. Allerdings muss hierbei beachtet werden, dass dieser Ansatz für jedes neue Medium, egal ob Polyurethan-Rohstoff oder -Formulierung, einer neuen Optimierung hinsichtlich der Chemie und der Konzentration des jeweiligen Dispergieradditivs bedarf und niemals eine Universallösung darstellen kann.

Zuletzt gilt zu beachten, dass jede Verarbeitung von Füllstoffen, so auch von Kohlenstoffnanoröhren, auch Risiken in der Hinsicht birgt, dass möglicherweise eine neue Eigenschaft, beispielsweise die elektrische Leitfähigkeit, erzielt werden kann, gleichzeitig allerdings mehrere andere mechanische Eigenschaften verschlechtert werden können. Dies ist vor allem dann kritisch, wenn Kohlenstoffnanoröhren in ungeschäumte, kompakte und/oder elastische Systeme eingearbeitet werden. Restagglomerate, die während des Dispergierprozesses nicht vollständig aufgebrochen werden konnten, stellen beispielsweise in einem kompakten Formteil eine Sollbruchstelle dar. Mechanische Eigenschaften wie zum Beispiel die Schlagzähigkeit und Bruchfestigkeit werden durch solche Agglomerate verschlechtert. Mit der Absicht nun, einen kompakten Werkstoff durch den Zusatz von Kohlenstoffnanoröhren elektrisch leitfähig zu machen, müssten nach dem bisherigen Stand der Technik über das gesamte Volumen des Werkstoffes Kohlenstoffnanoröhren homogen verteilt sein, sodass die Perkolationsgrenze überschritten wird und gleichzeitig keine Restagglomerate mehr vorliegen.

Diese Vorgehensweise scheitert sehr oft bereits an den dramatischen Viskositätsanstiegen, welche durch die hierfür erforderlichen Kohlenstoffnanoröhren-Konzentrationen zum Überschreiten der Perkolationsgrenze bedingt sind. Des Weiteren kann die Reagglomeration von homogen dispergierten Kohlenstoffnanoröhren während der Polyurethan-Verarbeitung mit dieser Methode nicht ausgeschlossen und ohne Weiteres verhindert werden.

Im Zusammenhang mit der Verarbeitung von Kohlenstoffnanoröhren in (thermoplastischen) Polyurethanen sind zahlreiche Arbeiten literaturbekannt, bei denen das fertige Polymer zuerst vollständig in einem organischen Lösungsmittel aufgelöst wird, anschließend die Nanoröhren-Dispergierung in dieser Polymerlösung erfolgt und die so erhaltene Nanoröhren-Dispersion auf Polyurethan/Lösungsmittelbasis zu einem Film gezogen oder in eine Form gegossen wird. Der letzte Schritt ist bei diesen Verfahren jeweils die langwierige Verdampfung der großen Mengen an Lösungsmittel. Beispiele hierfür finden sich in den folgenden Veröffentlichungen: N.G Sahoo, Y.C. Jung, H.J. Yoo, J.W. Cho, Composites Science and Technology 2007, 76, 1920-1929; N.G Sahoo, Y.C. Jung, H.J. Yoo, J.W. Cho, Macromol. Chem. Phys. 2006, 207, 1773-1780; M. Xu, T. Zhang, B. Gu, J. Wu, Q. Chen Macromolecules 2006, 39, 3540-3545; J. Deng, J. Cao, J. Li, H. Tan, Q. Zhang, Q. Fu, Journal of Applied Polymer Science 2008, 108, 2023-2028; R.N. Jana, J.W. Cho Journal of Applied Polymer Science 2008, 108, 2857-2864 und X. Wang, Z. Du, C. Zhang, C. Li, X. Yang, H. Li, Journal of Polymer Science: Part A: Polymer Chemistry 2008, 46, 4857-4865 sowie in US 2005/0127329 A1.

Eine Übersicht über dieses Gebiet findet sich auch in N. Grossiord, J. Loos, O. Regev, C. E. Koning, Chem. Mater., 2006, 18 (5), 1089-1099.

Des Weiteren sind Prozesse literaturbekannt (B.S. Shim, W. Chen, C. Doty, C. Xu, N.A. Kotov, Nano Lett. 2008, 8 (12), 4151-4157), bei denen Baumwollfasern in Kohlenstoffnanoröhren-Dispersionen auf Basis ethanolischer Nafion-Lösung oder wässriger PSS-Lösung getaucht werden. Hierdurch adsorbieren die Kohlenstoffnanoröhren irreversibel an die Oberfläche der Faser, bilden eine homogene Beschichtung und verleihen dieser Faser somit elektrische Leitfähigkeit.

B. Fugetsu et al. (Carbon 2008, ASAP, doi:10.1016/j.carbon.2008.11.013) etablierten ein Verfahren, bei dem Polyesterfasern durch ein Tauchbad geleitet und dabei an der Oberfläche mit CNTs beschichtet wurden. Hierfür wurden mehrwandige Kohlenstoffnanoröhren in wässriger Lösung zuerst mittels Tensiden dispergiert und anschließend mit einer anionischen PolyurethanDispersion versetzt. Die Tauchbadtemperatur betrug 40 °C. Die getauchte Faser wurde anschließend 30 s in einem Ofen auf 170 °C (100 °C oberhalb der Glasübergangstemperatur der Polyesterfaser) erhitzt. In Abhängigkeit der Nanoröhren-Konzentration besaßen so modifizierte Fasern auch nach dem Waschen mit Wasser elektrische Leitfähigkeiten im für Antistatik-Anwendungen interessanten Bereich.

Eine mögliche Alternative stellt der Ansatz dar, nicht die gesamte Polymermatrix, sondern nur eine unmittelbar an die Oberfläche angrenzende Materialschicht mit den Partikeln auszustatten. Wünschenswert wäre ein solches Vorgehen, um die eingangs beschriebenen Nachteile des Lösungsmittelverbrauchs und des Viskositätsanstiegs zu vermeiden.

Erfindungsgemäß vorgeschlagen wird daher ein Verfahren zum Einbringen von elektrisch leitfähigen Teilchen in eine Polyurethan umfassende Oberflächenschicht, umfassend die Schritte:
(A) Bereitstellen einer Lösung von nicht aggregierten Kohlenstoffteilchen mit einem mittleren Teilchendurchmesser von ≥0,3 nm bis ≤3000 nm in einem Lösungsmittel, welches in der Lage ist, das Aufquellen einer Polyurethan umfassenden Oberflächenschicht zu bewirken;
(B) Kontaktieren der Polyurethan umfassenden Oberflächenschicht mit der Lösung der Kohlenstoffteilchen;
(C) Einwirken der Lösung der Kohlenstoffteilchen auf die Polyurethan umfassende Oberflächenschicht für eine Zeitdauer, welche nicht ausreicht, um das Polyurethan in Lösung zu überführen;
(D) Beenden des Einwirkens der Lösung der Kohlenstoffteilchen auf die Polyurethan umfassende Oberflächenschicht.

Elektrisch leitfähige Teilchen im Sinne der vorliegenden Erfindung sind zunächst alle Teilchen aus einem Material, welches kein Isolator ist. Typischerweise werden als Isolatoren Substanzen bezeichnet, welche eine elektrische Leitfähigkeit von weniger als 10⁻⁸ S/m aufweisen. Die Teilchen werden in eine Polyurethan umfassende Oberflächenschicht eingebracht, was bedeutet, dass nicht unbedingt nur die Oberfläche selbst mit den Teilchen belegt wird, sondern auch das unmittelbar unterhalb der Oberfläche liegende Material die Teilchen aufnimmt. Demzufolge bedeutet im Rahmen der Erfindung der Begriff der Oberflächenschicht, im Gegensatz zur zweidimensionalen Oberfläche, eine dreidimensionale Materialschicht, welche die Oberfläche als eine ihrer Begrenzungen mit einschließt. Die Oberflächenschicht wird zum Inneren des betreffenden Gegenstands zumindest dadurch abgegrenzt, dass sie eben die elektrisch leitfähigen Partikel enthält.

Das Polyurethan (PUR) selbst kann zunächst jedes beliebige Polyurethan sein und die üblichen Zusätze wie Füllstoffe, Flammschutzmittel und dergleichen enthalten. Beispiele für Polyurethanklassen sind PUR-Schäume einschließlich geschäumter Polyurethane mit sehr hoher Rohdichte von über 600 kg/m³, PUR-Gießharze, PUR-Gießelastomere und thermoplastische PUR (TPU).

Es ist möglich und bevorzugt, dass die Oberflächenschicht zu einem Polyurethan umfassenden Formteil oder Halbzeug wie Folien, Röhren oder Platten zugehörig ist. Das Polyurethan liegt generell also nicht als Polymerdispersion vor.

Schritt (A) beinhaltet das Bereitstellen einer Lösung von nicht aggregierten Kohlenstoffteilchen. Dieses bedeutet, dass die Teilchen in dem Lösungsmittel vereinzelt vorliegen oder zumindest so wenig aggregiert sind, dass die Lösung stabil ist. In einer stabilen Lösung tritt hierbei in einer Lagerung bei Raumtemperatur für einen Zeitraum von mindestens einem Tag, vorzugsweise eine Woche oder vier Wochen, keine Ausflockung oder Ausfällung der Kohlenstoffteilchen ein. Um eine solche Lösung herzustellen, können die vorhandenen Aggregate der Kohlenstoffteilchen durch Energieeintrag, beispielsweise mittels Ultraschall, Mahlprozesse oder hohen Scherkräften, aufgebrochen werden. Letztendlich wird das Lösungsmittel danach ausgewählt, dass es sowohl die Lösung der Kohlenstoffteilchen bilden kann, als auch die Polyurethanoberfläche zum Quellen bringen kann.

Der mittlere Teilchendurchmesser kann auch in einem Bereich von ≥1 nm bis ≤1000 nm oder von ≥ 3 nm bis ≤ 100 nm liegen. Die Bestimmung kann beispielsweise mittels Rasterelektronenmikroskopie oder dynamischer Lichtstreuung erfolgen.

Das Lösungsmittel kann ein wässriges oder ein nicht-wässriges Lösungsmittel sein. Im letzteren Fall ist es vorzugsweise ein polares, aprotisches Lösungsmittel. Auf diese Weise kann das Lösungsmittel gut mit den Weichsegmentdomänen im Polyurethan wechselwirken. Der Begriff "nicht-wässrig" bedeutet, dass dem Lösungsmittel kein zusätzliches Wasser hinzugefügt wurde, schließt aber die technisch unvermeidlichen Wasserspuren, beispielsweise bis zu einer Menge von ≤5 Gewichts-%, vorzugsweise ≤3 Gewichts-% und mehr bevorzugt ≤1 Gewichts-%, nicht aus.

Ist das Lösungsmittel ein wässriges Lösungsmittel, so können die Kohlenstoffteilchen durch Zugabe von Tensiden oder anderen oberflächenaktiven Stoffen in Lösung desagglomeriert und in Lösung gehalten werden.

Die Kohlenstoffteilchen können in dem Lösungsmittel in einer Konzentration von beispielsweise ≥ 0,01 Gewichts-% bis ≤ 20 Gewichts-%, ≥ 0,1 Gewichts-% bis ≤ 15 Gewichts-% oder ≥ 1 Gewichts-% bis ≤10 Gewichts-% vorliegen.

Das Kontaktieren der Polyurethan umfassenden Oberflächenschicht mit der Lösung der Kohlenstoffteilchen in Schritt (B) erfolgt naturgemäß über die Oberfläche des Polyurethans.

Im darauffolgenden Schritt (C) wirkt die Lösung der Kohlenstoffteilchen auf die Oberflächenschicht ein. Ohne auf eine Theorie festgelegt zu sein, wird angenommen, dass hierbei durch das Lösungsmittel zumindest die Weichsegmentdomänen im Polyurethan aufquellen, sich Poren in der Oberflächenschicht bilden und dass Kohlenstoffteilchen in diese Poren hineinwandern können. Bei wässrigen oder wasserhaltigen Lösungsmitteln wird das Aufquellen der Weichsegmentdomänen dann begünstigt, wenn in dem Polyurethan lange Polyethersegmente mit einer geringen Anzahl an Kohlenstoffatomen zwischen den Etherbrücken vorliegen. Solche Domänen sind hydrophil genug, um aufquellen zu können. Die Teilchen können beispielsweise bis zu einer Tiefe von ≤150 nm, ≤100 nm oder ≤50 nm in die Oberflächenschicht eindringen.

Im Gegensatz zu lösungsbasierten Verfahren wird die Einwirkzeit so gewählt, dass das Polyurethan der Oberflächenschicht nicht in Lösung überführt wird. Hierin mit eingeschlossen sind technisch unvermeidliche Lösungsvorgänge, bei denen beispielsweise ≤1 Gewichts%, ≤0,1 Gewichts-% oder ≤0,01 Gewichts-% des Polyurethans in das Lösungsmittel übergehen. Das erfindungsgemäße Verfahren ist aber gerade kein Verfahren, bei dem zunächst das Polymer homogen gelöst wird und dann zusammen mit Nanopartikeln durch Entfernen des Lösungsmittels die fertigen Partikel in der Matrix erhalten wird. Vielmehr wird die Einwirkzeit so gewählt, dass ein Aufquellen der Polymeroberfläche stattfinden kann. Beispiele für geeignete Einwirkzeiten sind ≥1 Minute bis ≤ 360 Minuten, vorzugsweise ≥10 Minuten bis ≤90 Minuten, mehr bevorzugt ≥3 Minuten bis ≤5 Minuten.

Schritt (D) schließlich beinhaltet das Beenden des Einwirkens der Lösung der Kohlenstoffteilchen auf die Oberflächenschicht. Somit wird also die Lösung der Kohlenstoffteilchen von der Oberflächenschicht wieder getrennt. Anschließend kann die Oberflächenschicht gespült werden, um anhaftende Lösung zu entfernen. Dieses kann unter anderem dadurch geschehen, dass der Polyurethan-Gegenstand mit der zu modifizierenden Oberflächenschicht aus einem Tauchbad entfernt wird. Danach kann der Gegenstand beispielsweise mit Aceton abgespült werden.

Vorteilhafterweise schließt sich an Schritt (D) ein Trocknungsschritt an, bei dem das in der aufgequollenen Oberflächenschicht befindliche Lösungsmittel entfernt wird, wobei sich die Poren im Polyurethan schließen und die Kohlenstoffteilchen im Polymer eingeschlossen werden.

Das erfindungsgemäße Verfahren bietet somit die Möglichkeit, gezielt die Oberflächenschicht eines Polyurethangegenstands mit elektrisch leitfähigen Partikeln zu versehen. Hierbei wird die Form des Gegenstands nicht durch Auflösen zerstört, so dass auch fertige Formteile behandelt werden können. Da die Partikel im oberflächennahen Bereich des Gegenstands konzentriert sind, wird insgesamt eine geringere Menge benötigt, um eine elektrisch leitende Polyurethanoberfläche zu erhalten. Schließlich müssen, im Gegensatz zu lösungsbasierten Verfahren, keine großen Mengen an Lösungsmitteln entfernt werden, um das fertige modifizierte Polymer zu erhalten. Auch ist es möglich, die Konzentration der Kohlenstoffpartikel in einem Bereich zu halten, bei dem kein technisch nachteiliger Viskositätsanstieg eintritt.

Eine vorteilhafte Anwendung des erfindungsgemäßen Verfahrens ist die Behandlung von Polyurethan-Formteilen, welche anschließend durch eine elektrostatische Pulverbeschichtung lackiert werden sollen oder die galvanisiert werden sollen. Die elektrisch leitfähigen Teilchen in der Oberflächenschicht sorgen hierbei für einen verbesserten elektrostatischen Pulverauftrag. Eine weitere Anwendung betrifft das Behandeln von Polyurethan-Formteilen zur Vorbereitung einer Elektrotauchlackierung. Es lassen sich auch leitfähige Elektrodenmaterialien oder elastische Polyurethan-Kondensatoren erhalten. Weiterhin können elektronische Bauteile oder Kabelummantelungen mit einer antistatischen Beschichtung versehen werden.

In einer bevorzugten Ausführungsform des erfindungsgemäßen Verfahrens findet das Einwirken der Lösung der Kohlenstoffteilchen auf die Polyurethan umfassende Oberflächenschicht unter Einsatz von Ultraschall und/oder Wärme statt. Der Energieeintrag durch Ultraschall und/oder Wärme wirkt zum Einen der Bildung von Partikelaggregaten entgegen und ermöglicht somit höhere Partikelkonzentrationen in der Lösung. Weiterhin wird das Einbringen der Partikel in die Polyurethan-Oberflächenschicht beschleunigt. Vorteilhafterweise liegt beim Ultraschall die Frequenz bei ≥20 kHz bis ≤20 MHz und unabhängig davon die Leistungsdichte im Lösungsmittel ≥ 1 W/l bis ≤ 200 W/l. Bei einer Erwärmung während der Einwirkung kann die Temperatur beispielsweise ≥30 °C bis ≤200 °C, bevorzugt ≥40 °C bis ≤150 °C betragen.

In einer weiteren Ausführungsform des erfindungsgemäßen Verfahrens sind die Kohlenstoffteilchen an ihrer Oberfläche nicht kovalent funktionalisiert. Dieses bedeutet, dass die Teilchen keine zusätzlichen, über weitere Reaktionsschritte kovalent angebundenen funktionellen Gruppen an ihrer Oberfläche tragen. Insbesondere vermieden wird der Einsatz von Oxidationsmitteln wie Salpetersäure, Wasserstoffperoxid, Kaliumpermanganat und Schwefelsäure oder eine mögliche Mischung dieser Mittel für die Funktionalisierung der Kohlenstoffteilchen. Vorteilhaft am Einsatz nicht kovalent funktionalisierter Teilchen ist, dass das π-Elektronensystem der Oberfläche nicht gestört wird und daher uneingeschränkt zur elektrischen Leitfähigkeit beitragen kann.

In einer weiteren Ausführungsform des erfindugsgemäßen Vefharens sind die Kohlenstoffteilchen ausgewählt aus der Gruppe umfassend Kohlenstoff-Nanoröhren, einwandige Kohlenstoff-Nanoröhren, mehrwandige Kohlenstoff-Nanoröhren, Kohlenstoff-Nanohörner, Kohlenstoff-Nanozwiebeln, Fullerene, Graphit, Graphen, Kohlenstoff-Fasern und/oder Leitruß. Diese Teilchen können neben einer Erhöhung der elektrischen Leitfähigkeit auch mechanische Eigenschaften der Oberflächenschicht, wie zum Beispiel Elastizität und Schlagzähigkeit, verbessern.

Kohlenstoffnanoröhren im Sinne der Erfindung sind alle einwandigen oder mehrwandigen Kohlenstoffnanoröhren vom Zylinder-Typ, Scroll-Typ, Multiscroll-Typ oder mit zwiebelartiger Struktur. Bevorzugt sind mehrwandige Kohlenstoffnanoröhren vom Zylinder-Typ, Scroll-Typ, Multiscroll-Typ oder deren Mischungen einzusetzen. Günstig ist es, wenn die Kohlenstoffnanoröhren ein Verhältnis von Länge zu Außendurchmesser von ≥5, bevorzugt ≥100 haben.

Im Unterschied zu den bereits erwähnten bekannten Kohlenstoffnanoröhren vom Scroll-Typ mit nur einer durchgehenden oder unterbrochenen Graphenlage existieren auch Kohlenstoffnanoröhren-Strukturen, die aus mehreren Graphenlagen bestehen, welche zu einem Stapel zusammengefasst und aufgerollt vorliegen. Man spricht hierbei vom Multiscroll-Typ. Diese Kohlenstoffhanoröhren werden in DE 10 2007 044031 A1 beschrieben, auf die in vollem Umfang Bezug genommen wird. Diese Struktur verhält sich zu den Kohlenstoffnanoröhren vom einfachen Scroll-Typ vergleichsweise wie die Struktur mehrwandiger zylindrischer Kohlenstoffnanoröhren (cylindrical MWNT) zur Struktur der einwandigen zylindrischen Kohlenstoffnanoröhren (cylindrical SWNT).

Anders als bei den zwiebelartigen Strukturen (onion type structure) verlaufen die einzelnen Graphen- bzw. Graphitschichten in diesen Kohlenstoffnanoröhren im Querschnitt gesehen offenbar durchgehend vom Zentrum der Kohlenstoffhanoröhren bis zum äußeren Rand ohne Unterbrechung. Dies kann zum Beispiel eine verbesserte und schnellere Interkalierung anderer Materialien im Röhrchengerüst ermöglichen, da mehr offene Ränder als Eintrittszone der Interkalate zur Verfügung stehen im Vergleich zu Kohlenstoffnanoröhren mit einfacher Scrollstruktur (Carbon 1996, 34, 1301-3) oder CNTs mit zwiebelartiger Struktur (Science 1994, 263, 1744-7).

In einer bevorzugten Ausführungsform des erfindungsgemäßen Verfahrens sind die Kohlenstoffteilchen nicht kovalent funktionalisierte, mehrwandige Kohlenstoff-Nanoröhren mit einem Durchmesser von ≥ 3 nm bis ≤100 nm. Der Durchmesser bezieht sich hierbei auf den mittleren Durchmesser der Nanoröhren. Er kann auch in einem Bereich von ≥5 nm bis ≤80 nm und vorteilhafterweise von ≥6 nm bis ≤60 nm liegen. Die Länge der Nanoröhren ist zunächst nicht begrenzt. Sie kann aber beispielsweise in einem Bereich von ≥ 1 *µ*m bis ≤ 100 *µ*m und vorteilhafterweise von ≥10 *µ*m bis ≤30 *µ*m liegen.

In einer weiteren Ausführungsform des erfindungsgemäßen Verfahrens ist das Polyurethan erhältlich aus der Reaktion von Polyisocyanaten mit Polyesterpolyolen und/oder Polyetherpolyolen. Bevorzugte Polyisocyanate solche auf der Basis von Diphenylmethandiisocyanat (MDI) und Toluoldiisocyanat (TDI). Bevorzugte Polyesterpolyole und Polyetherpolyole weisen Hydroxylzahlen von ≥ 100 mg KOH/g bis ≤150 mg KOH/g auf. Bevorzugte Polyole können weiterhin Molmassen im Bereich von ≥250 bis ≤5000 g/mol, vorzugsweise ≥400 bis ≤3500 g/mol eine Funktionalität zwischen ≥ 1,8 und ≤ 6, vorzugsweise zwischen ≥ 1,95 und ≤ 3,5 aufweisen. Erfindungsgemäß mit eingeschlossen sind Polyurethane, die aus Prepolymeren der erwähnten Ausgangsverbindungen unter nachträglicher Kettenverlängerung erhältlich sind.

In einer weiteren Ausführungsform des erfindungsgemäßen Verfahrens ist das Lösungsmittel ausgewählt aus der Gruppe umfassend Methanol, Ethanol, Isopropanol, Butanol, Ethylenglykol, Propylenglykol, Butylenglykol, Glycerin, Hydrochinon, Aceton, Ethylacetat, Trichlorethylen, Trichlorethan, Trichlormethan, Methylenchlorid, Cyclohexanon, N,N-Dimethylformamid, Dimethylsulfoxid, Tetrahydrofuran, N-Methyl-2-pyrrolidon, Benzol, Toluol, Chlorbenzol, Styrol, Polyesterpolyole, Polyetherpolyole, Gemische der vorgenannten Lösungsmittel untereinander und/oder Mischungen der vorgenannten Lösungsmittel mit Wasser.

Diese Lösungsmittel vereinigen in besonderer Weise die Fähigkeit, aggregatarme oder aggregatfreie Lösungen mit den Kohlenstoffteilchen zu bilden und dabei gleichzeitig zu einem Aufquellen der Polyurethanoberfläche zu führen. Mischungen der vorgenannten Lösungsmittel betreffen solche Fälle, in denen das Lösungsmittel im gewünschten Massenanteil auch in Wasser löslich ist.

In einer weiteren Ausführungsform des erfindungsgemäßen Verfahrens erfolgt das Kontaktieren der Polyurethan umfassenden Oberflächenschicht mit der Lösung der Kohlenstoffteilchen durch Eintauchen, Auftragen, Bedrucken, Bestreichen, Besprühen und/oder Begießen. Durch Eintauchen in ein Tauchbad lassen sich beispielsweise Gegenstände leicht vollständig behandeln. Auch kann leicht ein kontinuierlicher Prozess zur Herstellung eines so behandelten Polymerfilms realisiert werden. Das Bedrucken von Polyurethan-Gegenständen, zum Beispiel im Siebdruckverfahren, erlaubt das Darstellen von elektrisch leitfähigen Strukturen wie Leiterbahnen am Polyurethan-Gegenstand.

In einer weiteren Ausführungsform des erfindungsgemäßen Verfahrens ist zumindest in Schritt (C) die Polyurethan umfassende Oberflächenschicht teilweise durch eine Maske abdeckt. Durch die Maske werden Teilbereiche der Oberfläche abgedeckt und andere Bereiche freigelassen. Auf diese Weise lassen sich elektrisch leitfähige Strukturen auf der Elastomeroberfläche wie Leiterbahnen und dergleichen darstellen. Eine andere Einsatzmöglichkeit für die Verwendung einer Maske ist, isolierende Flächen an den Kanten eines Werkstücks zu erhalten.

Ein weiterer Gegenstand der vorliegenden Erfindung ist eine Polyurethan-Schicht, umfassend elektrisch leitfähige Kohlenstoffteilchen und erhältlich durch ein erfindungsgemäßes Verfahren, wobei die äußere Oberfläche der Polyurethan-Schicht Erhebungen und Vertiefungen umfasst mit einer durchschnittlichen Höhe der Erhebungen von ≥ 50 nm bis ≤ 500 nm und einem durchschnittlichen Abstand zwischen benachbarten Erhebungen von ≥0,5 *µ*m bis ≤ 1,5 *µ*m. Die Höhe der Erhebung errechnet sich aus dem vertikalen Abstand des höchsten Punktes einer Erhebung zu dem tiefsten Punkt einer benachbarten Vertiefung. Bildlich gesprochen entspricht dieses dem Abstand von Wellenberg zu Wellental. Der Abstand zwischen benachbarten Erhebungen ist dann bildlich gesehen der Abstand zweier Wellenberge. Im Querschnitt kann dieses ein ausgefranstes Bild ergeben. Die Oberfläche der Polyurethan-Schicht kann beispielsweise als Netzwerk von länglichen Erhebungen und den entsprechenden, talförmigen Vertiefungen vorliegen. In Hinblick auf die durchschnittliche Höhe der Erhebungen kann sie auch in einem Bereich von ≥ 100 nm bis ≤400 nm oder von ≥ 150 nm bis ≤300 nm liegen. Der durchschnittliche Abstand zwischen benachbarten Erhebungen kann auch in einem Bereich von ≥0,7 *µ*m bis ≤1,2 *µ*m oder von ≥0,9 *µ*m bis ≤1,0 *µ*m liegen.

Die Lösung mit den Kohlenstoffteilchen bewirkt ein Quellen der Polyurethan-Segmentstruktur an der Kontaktfläche, was je nach Polarität der eingesetzten Lösung von einem Quellen der Weichsegmente bis hin zu einem Quellen der Hartsegmente führt. Dadurch können die Kohlenstoffteilchen mit dem Polyurethan wechselwirken und in die Polyurethan-Matrix eindringen. Ein anschließendes Verdampfen der Lösung führt durch die Einbettung der Kohlenstoffteilchen somit zu einer veränderten Morphologie der Polyurethan-Weich- und Hartsegmente an der Oberfläche. Im Rasterkraftmikroskop-Bild lässt sich dieses beispielsweise als wellenförmige Erhebungen und Vertiefungen ausmachen.

Die Polyurethan-Schicht kann beispielsweise einen spezifischen Widerstand von ≥10⁻³ Ohm cm bis ≤ 10⁸ Ohm cm aufweisen. Der spezifische Widerstand lässt sich anhand der Norm DIN IEC 60093(12).93 bestimmen. Vorzugsweise liegt der spezifische Widerstand dieser Polyurethan-Schicht in einem Bereich von ≥0,01 Ohm cm bis ≤1000000 Ohm cm, besonders bevorzugt von ≥ 0,1 Ohm cm bis ≤100000 Ohm cm.

Die vorliegende Erfindung betrifft ebenfalls einen Polyurethan-Gegenstand mit einer durch ein erfindungsgemäßes Verfahren erhältlichen, elektrisch leitfähige Kohlenstoffteilchen umfassenden Oberflächenschicht, wobei die Kohlenstoffteilchen in dem Polyurethan bis zu einer Tiefe von ≤1 µm unterhalb der Oberfläche angeordnet vorliegen. Wie bereits ausgeführt, umfasst die Oberflächenschicht Polyurethan. Vorteilhafterweise bilden die Teilchen in dieser Oberflächenschicht ein Netzwerk aus, so dass eine elektrische Leitfähigkeit eintritt. Die Teilchen können auch bis zu einer Tiefe von ≤500 nm oder ≤150 nm unterhalb der Oberfläche angeordnet vorliegen. Erfindungsgemäß mit eingeschlossen sind auch Gegenstände, welche die mit Kohlenstoffteilchen ausgestattete Polyurethan-Oberflächenschicht umfassen und zusätzlich noch weitere Materialien aufweisen. Es kann sich beispielsweise um Gebrauchsgegenstände handeln, welche zumindest teilweise eine Polyurethan-Oberfläche umfassen und wobei in diese Oberfläche beziehungsweise Polyurethan-Oberflächenschicht die elektrisch leitfähigen Kohlenstoffteilchen eingebracht wurden.

Exemplarisch für die erwähnten Polyurethan-Gegenstände seien Polyurethan-Formteile genannt, welche anschließend durch eine elektrostatisches Pulverbeschichtung oder Elektrotauchlackierung lackiert werden sollen oder die galvanisiert werden sollen. Andere Beispiele sind leitfähige sowie leitfähige und elastische Elektrodenmaterialien, allgemein elektronische Bauteile oder Kabelummantelungen mit einer antistatischen Beschichtung.

In einer Ausführungsform des Polyurethan-Gegenstands liegen die Kohlenstoffteilchen innerhalb des sie umfassenden Polyurethanmaterials der Oberflächenschicht in einem Anteil von ≥ 0,1 Gewichts-% bis ≤5 Gewichts-% vor. Der Anteil kann auch in einem Bereich von ≥0,5 Gewichts-% bis ≤4 Gewichts-% oder von ≥1 1 Gewichts-% bis ≤5 Gewichts-% liegen. Letztendlich wird hierdurch also der Gehalt an Kohlenstoffteilchen in der Oberflächenschicht angegeben. Die Grenze der Oberflächenschicht im Inneren des Gegenstands, ab der das Polyurethanmaterial nicht mehr in die Berechnung einfließt, wird durch die unterste (innerste) Linie, bis zu der die Kohlenstoffteilchen im Polyurethan vorkommen, gebildet. Innerhalb der angegebenen Bereiche lässt sich die Perkolationsgrenze für die Kohlenstoffteilchen überschreiten, so dass die elektrische Leitfähigkeit stark verbessert wird.

In einer weiteren Ausführungsform des Polyurethan-Gegenstands weist die die Kohlenstoffteilchen umfassende Oberflächenschicht einen spezifischen Widerstand von ≥10⁻³ Ohm cm bis ≤10⁸ Ohm cm aufweisen. Der spezifische Widerstand lässt sich anhand der Norm DIN IEC 60093(12).93 bestimmen. Vorzugsweise liegt der spezifische Widerstand dieser Polyurethan-Schicht in einem Bereich von ≥0,01 Ohm cm bis ≤1000000 Ohm cm, besonders bevorzugt von ≥0,1 Ohm cm bis ≤ 100000 Ohm cm.

In einer weiteren Ausführungsform des Polyurethan-Gegenstands sind die Kohlenstoffteilchen unfunktionalisierte, mehrwandige Kohlenstoff-Nanoröhren mit einem Durchmesser von ≥3 nm bis ≤100 nm. Der Durchmesser bezieht sich hierbei auf den mittleren Durchmesser der Nanoröhren. Er kann auch in einem Bereich von ≥5 nm bis ≤80 nm und vorteilhafterweise von ≥6 nm bis ≤60 nm liegen. Die Länge der Nanoröhren ist zunächst nicht begrenzt. Sie kann aber beispielsweise in einem Bereich von ≥1 *µ*m bis ≤100 *µ*m und vorteilhafterweise von ≥10 *µ*m bis ≤30 *µ*m liegen.

In einer weiteren Ausführungsform des Polyurethan-Gegenstands weist dieser eine erste und einer zweite elektrisch leitfähige Kohlenstoffteilchen umfassenden Oberflächenschicht auf, wobei die besagte erste und zweite Oberflächenschicht einander gegenüberliegend angeordnet sind und durch eine Polyurethanschicht voneinander getrennt sind. Bedingt durch das Herstellungsverfahren sind die erste und die zweite Oberflächenschicht integral mit der trennenden, elektrisch isolierenden Polyurethanschicht verbunden. Durch solch einen Aufbau von zwei durch ein Dielektrikum getrennten elektrisch leitfähigen Schichten kann ein elastischer Kondensator realisiert werden.

In einer weiteren Ausführungsform des Polyurethan-Gegenstands liegt dieser als Verbund eines Trägermaterials mit der elektrisch leitfähige Kohlenstoffteilchen umfassenden Polyurethan-Oberflächenschicht vor. Beispiele für Trägermaterialien sind Keramiken, Metalle, aber auch andere Polymere wie Polycarbonate oder Polyolefine. So kann beispielsweise ein Metall-Formteil zunächst mit Polyurethan beschichtet werden und anschließend die Polyurethan-Oberflächenschicht mit den Kohlenstoffteilchen versehen werden.

Die vorliegende Erfindung wird anhand der nachfolgenden Ausführungsbeispiele in Verbindung mit den Figuren weiter erläutert. Es zeigen:
- FIG. 1: einen Polyurethan-Gegenstand mit einem dreischichtigen Aufbau
- FIG. 2: eine Rasterkraftmikroskop-Aufnahme eines Probenquerschnitts
- FIG. 3: eine weitere Rasterkraftmikroskop-Aufnahme eines Probenquerschnitts
- FIG. 4: eine weitere Rasterkraftmikroskop-Aufnahme eines Probenquerschnitts
- FIG. 5: eine weitere Rasterkraftmikroskop-Aufnahme eines Probenquerschnitts
- FIG. 6: eine weitere Rasterkraftmikroskop-Aufnahme einer Probenoberfläche
- FIG. 7: eine weitere Rasterkraftmikroskop-Aufnahme einer Probenoberfläche

### Ausführungsbeispiele:

Einsatzstoffe, Polyurethan-Herstellung und allgemeine Durchführung:
- Polyol:: Polyetherpolyol mit einer OH-Zahl von 112 mg KOH/mg und einer Viskosität von 140 mPa·s bei 25 °C
- Katalysator:: Dibutylzinndilaurat (0,02 Gewichts-%), DABCO 33-LV® (0,54 Gewichts-%, Air Products)
- Isocyanat:: DESMODUR® CD-S: modifiziertes Isocyanat auf Basis von Diphenylmethan-4,4'-diisocyanat mit einem NCO-Gehalt von 29,0 bis 30,0 Gewichts-% und einer Viskosität von 20 bis 50 mPa·s bei 25 °C
- Kohlenstoffteilchen:: Multi-Walled Carbon Nanotubes (BAYTUBES® C 150 P)
- Tauchlösung:: Dispersion aus BAYTUBES® C 150 P in einem Lösungsmittel

Die vorgenannten Komponenten Polyol, Katalysator und Isocyanat wurden bei Raumtemperatur so miteinander vermischt, dass die Kennzahl 105 betrug. Die Tauchlösung wurde durch Beschallung der Kohlenstoffteilchen im Ultraschallbad hergestellt und unmittelbar eingesetzt. Zur Funktionalisierung der Polyurethan-Oberfläche wurden die Proben vollständig in die Lösung getaucht, nach der Entnahme kurz mit Aceton abgespült und bei erhöhter Temperatur von überschüssigem Lösungsmittel befreit.

### Beispiel 1 (in NMP, mit Ultraschall):

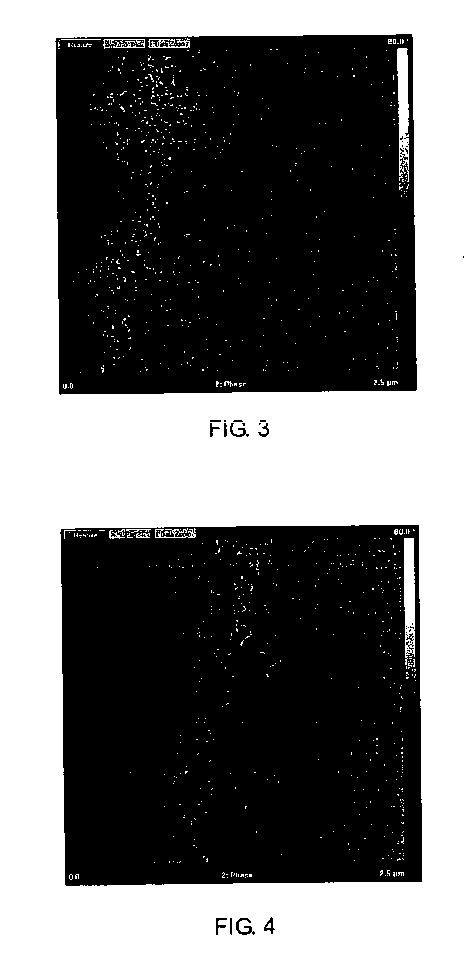

Ein Probenstück eines Polyurethan-Elastomers (7 x 7 x 0,2 cm) wurde vollständig in eine Lösung aus 1 Gewichts-% BAYTUBES® C 150 P in N-Methyl-2-pyrrolidon getaucht. Die Einwirkzeit betrug 0,5 h unter Beschallung in einem Ultraschallbad und zusätzlich 5,5 h ohne Beschallung bei Raumtemperatur. Die Probe wurde kurz mit Aceton abgespült und bei 100 °C im Trockenschrank von Lösungsmitteln befreit. Der gemessene Oberflächenwiderstand lag im Bereich von 10² bis 10⁴ Ohm cm. Über eine nähere Untersuchung mittels AFM ließ sich der Einbau der Nanoröhren in die Polyurethan-Oberfläche bis zu einer Eindringtiefe von circa 0,5 µm nachweisen (FIG. 3).

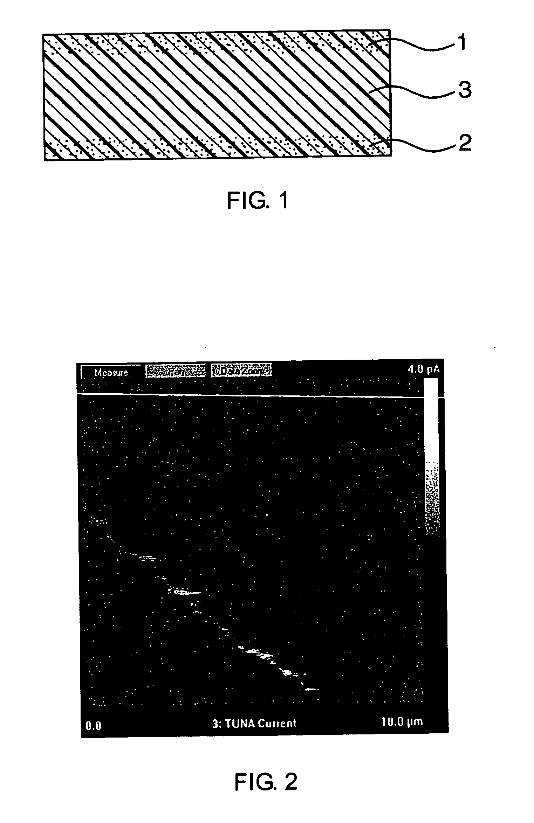

Entsprechende Leitfähigkeitsmessungen (TUNA) wiesen ebenfalls Leitfähigkeit an der PU-Oberfläche nach (FIG. 2).

### Beispiel 2 (in Aceton, mit Ultraschall):

Ein Probenstück eines Polyurethan-Elastomers (7 x 7 x 0,2 cm) wurde unter Beschallung in einem Ultraschallbad vollständig in eine Lösung aus 0,5 Gewichts-% BAYTUBES® C 150 P in Aceton getaucht. Die Einwirkzeit betrug 1 h, die Temperatur der Tauchlösung betrug 45 °C. Die Probe wurde kurz mit Aceton abgespült und bei 50 °C im Trockenschrank von Lösungsmittel befreit. Der gemessene Oberflächenwiderstand lag im Bereich von 10⁵ Ohm cm.

### Beispiel 3 (in Aceton, ohne Ultraschall):

Ein Probenstück eines Polyurethan-Elastomers (7 x 7 x 0,2 cm) wurde in eine Lösung aus 0,5 Gewichts-% BAYTUBES® C 150 P in Aceton getaucht. Die Einwirkzeit betrug 1 h, die Temperatur der Tauchlösung betrug 23 °C. Die Probe wurde kurz mit Aceton abgespült und bei 50 °C im Trockenschrank von Lösungsmittel befreit. Der gemessene Oberflächenwiderstand lag im Bereich von 10⁶ Ohm cm.

FIG. 1 zeigt schematisch einen erfindungsgemäßen Polyurethan-Gegenstand mit dreischichtigem Aufbau. Ausgehend von einem Polyurethan-Werkstück wurden in die obere (1) und die untere (2) Oberflächenschicht des Polyurethans Kohlenstoffnanoröhren eingebracht. Diese Nanoröhren sind durch Striche oder Punkte in den jeweiligen Schichten (1, 2) dargestellt. Man erkennt, dass die Nanoröhren eine begrenzte Eindringtiefe in die Oberflächenschichten aufweisen. Die Oberflächenschichten sind durch eine nanoröhrenfreie Polyurethanschicht (3) voneinander getrennt. Aufgrund des Herstellungsverfahrens ist der Polyurethan-Gegenstand in Hinblick auf die die Oberflächenschichten (1, 2) immer noch einstückig aufgebaut und die Oberflächenschichten sind stoffschlüssig mit der nanoröhrenfreien Schicht (3) verbunden. Der gezeigte Polyurethan-Gegenstand kann, bei geeigneten Abmessungen, beispielsweise als filmförmiger Kondensator dienen.

Eine Probe des in Beispiel 1 erhaltenen Polyurethan-Gegenstands wurde mittels Rasterkraftmikroskop- (AFM-) Aufnahmen untersucht. Informationen über das Vorliegen und die Anordnung der Kohlenstoffnanoröhren liefert die Tunnel-AFM-Aufnahme (TUNA) in FIG. 2. Hierbei handelt es sich um einen Probenquerschnitt. Die Breite des dargestellten Bildausschnitts betrug 10 *µ*m. Im linken Teil der Aufnahme befindet sich Matrixmaterial, in das die Probe eingeschlossen wurde, um die Querschnitte zu präparieren. Im rechten Teil befindet sich das unveränderte Polyurethanmaterial. Dazwischen verläuft, erkennbar als helle Punkte, die mit den Tunnelstrom leitenden Kohlenstoffnanoröhren durchsetzte Oberflächenschicht.

FIG. 3 und 4 zeigen unterschiedliche Bildausschnitte derselben Probe in Querschnittsansicht und im phasensensitiven Modus. Die Breite des dargestellten Bildausschnitts betrug 2,5 *µ*m. Im jeweils linken Teil der Aufnahmen befindet sich Matrixmaterial, in das die Probe eingeschlossen wurde, um die Querschnitte zu präparieren. Im rechten Teil befindet sich das unveränderte Polyurethanmaterial. Dazwischen verläuft die mit Kohlenstoffhanoröhren durchsetzte Oberflächenschicht. Die phasensensitiven Aufnahmen in FIG 3 und 4 lassen die in der Oberflächenschicht eingebetteten Kohlenstoffnanoröhren gut sichtbar als helle Linien erkennen. Insgesamt zeigt man also, dass die Nanoröhren auch unterhalb der Oberfläche des Polyurethans vorliegen.

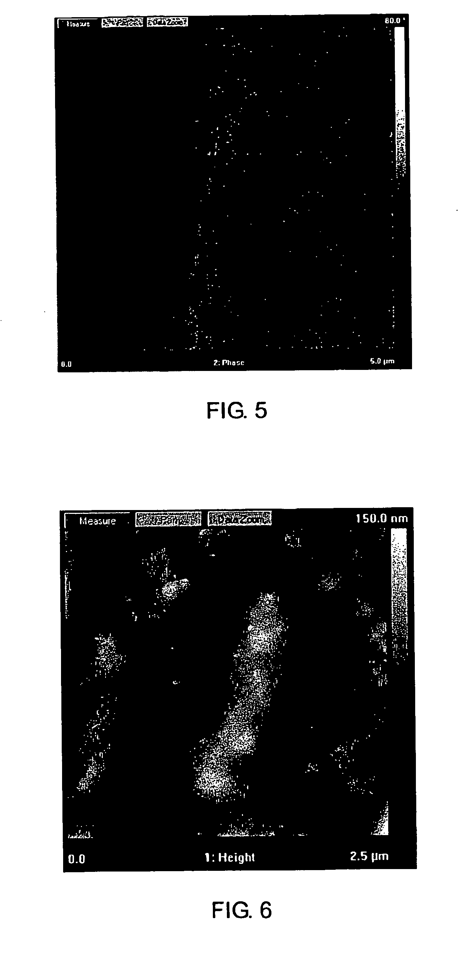

FIG. 5 zeigt eine weitere Querschnittsansicht mit einer Breite des Bildausschnitts von 5 *µ*m. Man erkennt die in der Oberflächenschicht eingebetteten Kohlenstoffhanoröhren als gut sichtbare helle Linien.

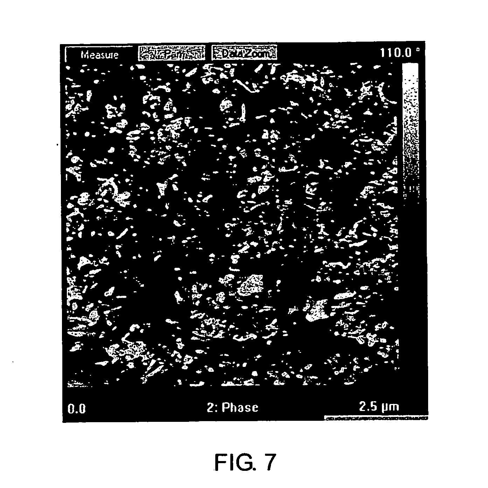

Bilder von einer Draufsicht auf die Probenoberfläche sind in FIG 6 und 7 gezeigt. Die Höhenaufnahme in FIG. 6 zeigt eine von Erhebungen und talförmigen Vertiefungen durchzogene Struktur. Die Breite des dargestellten Bildausschnitts betrug 2,5 *µ*m. In der korrespondierenden phasensensitiven Ansicht in FIG. 7 zeigen sich auf der Probenoberfläche zugängliche Kohlenstoffnanoröhren als helle Linien.

## Patentansprüche

1. Verfahren zum Einbringen von elektrisch leitfähigen Teilchen in eine Polyurethan umfassende Oberflächenschicht, umfassend die Schritte:
(A) Bereitstellen einer Lösung von nicht aggregierten Kohlenstoffteilchen mit einem mittleren Teilchendurchmesser von ≥0,3 nm bis ≤3000 nm in einem Lösungsmittel, welches in der Lage ist, das Aufquellen einer Polyurethan umfassenden Oberflächenschicht zu bewirken;
(B) Kontaktieren der Polyurethan umfassenden Oberflächenschicht mit der Lösung der Kohlenstoffteilchen;
(C) Einwirken der Lösung der Kohlenstoffteilchen auf die Polyurethan umfassende Oberflächenschicht für eine Zeitdauer, welche nicht ausreicht, um das Polyurethan in Lösung zu überführen;
(D) Beenden des Einwirkens der Lösung der Kohlenstoffteilchen auf die Polyurethan umfassende Oberflächenschicht.

2. Verfahren gemäß Anspruch 1, wobei das Einwirken der Lösung der Kohlenstoffteilchen auf die Polyurethan umfassende Oberflächenschicht unter Einsatz von Ultraschall und/oder Wärme stattfindet.

3. Verfahren gemäß Anspruch 1, wobei die Kohlenstoffteilchen an ihrer Oberfläche nicht kovalent funktionalisiert sind.

4. Verfahren gemäß Anspruch 1, wobei die Kohlenstoffteilchen ausgewählt sind aus der Gruppe umfassend Kohlenstoff-Nanoröhren, einwandige Kohlenstoff-Nanoröhren, mehrwandige Kohlenstoff-Nanoröhren, Kohlenstoff-Nanohömer, Kohlenstoff-Nanozwiebeln, Fullerene, Graphit, Graphen, Kohlenstoff-Fasern und/oder Leitruß.

5. Verfahren gemäß Anspruch 4, wobei die Kohlenstoffteilchen nicht kovalent funktionalisierte, mehrwandige Kohlenstoff-Nanoröhren mit einem Durchmesser von ≥3 nm bis ≤100 nm sind.

6. Verfahren gemäß Anspruch 1, wobei das Lösungsmittel ausgewählt ist aus der Gruppe umfassend Methanol, Ethanol, Isopropanol, Butanol, Ethylenglykol, Propylenglykol, Butylenglykol, Glycerin, Hydrochinon, Aceton, Ethylacetat, Trichlorethylen, Trichlorethan, Trichlormethan, Methylenchlorid, Cyclohexanon, N,N-Dimethylformamid, Dimethylsulfoxid, Tetrahydrofuran, N-Methyl-2-pyrrolidon, Benzol, Toluol, Chlorbenzol, Styrol, Polyesterpolyole, Polyetherpolyole, Gemische der vorgenannten Lösungsmittel untereinander und/oder Mischungen der vorgenannten Lösungsmittel mit Wasser.

7. Verfahren gemäß Anspruch 1, wobei das Kontaktieren der Polyurethan umfassenden Oberflächenschicht mit der Lösung der Kohlenstoffteilchen durch Eintauchen, Auftragen, Bedrucken, Bestreichen, Besprühen und/oder Begießen erfolgt.

8. Verfahren gemäß Anspruch 1, wobei zumindest in Schritt (C) die Polyurethan umfassende Oberflächenschicht teilweise durch eine Maske abdeckt ist.

9. Polyurethan-Schicht, umfassend elektrisch leitfähige Kohlenstoffteilchen und erhältlich durch ein Verfahren gemäß Anspruch 1, wobei die äußere Oberfläche der Polyurethan-Schicht Erhebungen und Vertiefungen umfasst mit einer durchschnittlichen Höhe der Erhebungen von ≥50 nm bis ≤500 nm und einem durchschnittlichen Abstand zwischen benachbarten Erhebungen von ≥0,5 *µ*m bis ≤1,5 *µ*m.

10. Polyurethan-Gegenstand mit einer durch ein Verfahren gemäß Anspruch 1 erhältlichen, elektrisch leitfähige Kohlenstoffteilchen umfassenden Oberflächenschicht (1), wobei die Kohlenstoffteilchen in dem Polyurethan bis zu einer Tiefe von ≤1 µm unterhalb der Oberfläche angeordnet vorliegen.

11. Polyurethan-Gegenstand gemäß Anspruch 10, wobei die Kohlenstoffteilchen innerhalb des sie umfassenden Polyurethanmaterials der Oberflächenschicht (1) in einem Anteil von ≥ 0,1 Gewichts-% bis ≤5 Gewichts-% vorliegen.

12. Polyurethan-Gegenstand gemäß Anspruch 10, wobei die die Kohlenstoffteilchen umfassende Schicht (1) einen spezifischen Widerstand von ≥10⁻³ Ohm cm bis ≤10⁸ Ohm cm an der Oberfläche aufweist.

13. Polyurethan-Gegenstand gemäß Anspruch 10, wobei die Kohlenstoffteilchen nicht kovalent funktionalisierte, mehrwandige Kohlenstoff-Nanoröhren mit einem Durchmesser von ≥3 nm bis ≤100 nm sind.

14. Polyurethan-Gegenstand gemäß Anspruch 10 mit einer ersten (1) und einer zweiten (2) elektrisch leitfähige Kohlenstoffteilchen umfassenden Oberflächenschicht, wobei die besagte erste (1) und zweite (2) Oberflächenschicht einander gegenüberliegend angeordnet sind und durch eine Polyurethanschicht (3) voneinander getrennt sind.

15. Polyurethan-Gegenstand gemäß Anspruch 10, vorliegend als Verbund eines Trägermaterials mit der elektrisch leitfähige Kohlenstoffteilchen umfassenden Polyurethan-Oberflächenschicht.

## Claims

1. Process for introducing electrically conductive particles into a surface layer comprising polyurethane, which comprises the steps:
(A) provision of a solution of unaggregated carbon particles having an average particle diameter of from ≥ 0.3 nm to ≤ 3000 nm in a solvent which is able to bring about swelling of a surface layer comprising polyurethane;
(B) contacting of the surface layer comprising polyurethane with the solution of the carbon particles;
(C) acting of the solution of the carbon particles on the surface layer comprising polyurethane for a time which is not sufficient to bring the polyurethane into solution;
(D) ending of the acting of the solution of the carbon particles on the surface layer comprising polyurethane.

2. Process according to Claim 1, wherein the acting of the solution of the carbon particles on the surface layer comprising polyurethane takes place with use of ultrasound and/or heat.

3. Process according to Claim 1, wherein the carbon particles are not covalently functionalized on their surface.

4. Process according to Claim 1, wherein the carbon particles are selected from the group consisting of carbon nanotubes, single-walled carbon nanotubes, multiwalled carbon nanotubes, carbon nanohorns, carbon nano-onions, fullerenes, graphite, graphene, carbon fibres and conductive carbon black.

5. Process according to Claim 4, wherein the carbon particles are multiwalled carbon nanotubes which are not covalently functionalized and have a diameter of from ≥ 3 nm to ≤ 100 nm.

6. Process according to Claim 1, wherein the solvent is selected from the group consisting of methanol, ethanol, isopropanol, butanol, ethylene glycol, propylene glycol, butylene glycol, glycerol, hydroquinone, acetone, ethyl acetate, trichloroethylene, trichloroethane, trichloromethane, methylene chloride, cyclohexanone, N,N-dimethylformamide, dimethyl sulphoxide, tetrahydrofuran, N-methyl-2-pyrrolidone, benzene, toluene, chlorobenzene, styrene, polyester polyols, polyether polyols, mixtures of the abovementioned solvents with one another and mixtures of the abovementioned solvents with water.

7. Process according to Claim 1, wherein, the contacting of the surface layer comprising polyurethane with the solution of the carbon particles is effected by dipping, application, printing, painting, spraying and/or pouring on.

8. Process according to Claim 1, wherein, at least in step (C), the surface layer comprising polyurethane is partly covered by a mask.

9. Polyurethane layer which comprises electrically conductive carbon particles and can be obtained by a process according to Claim 1, wherein the outer surface of the polyurethane layer has elevations and depressions with an average height of the elevations of from ≥ 50 nm to ≤ 500 nm and an average distance between adjacent elevations of from ≥ 0.5 µm to ≤ 1.5 µm.

10. Polyurethane object having a surface layer (1) which comprises electrically conductive carbon particles and can be obtained by a process according to Claim 1, wherein the carbon particles in the polyurethane are present down to a depth of ≤ 1 µm below the surface.

11. Polyurethane object according to Claim 10, wherein the carbon particles are present in a proportion of from ≥ 0.1% by weight to ≤ 5% by weight within the polyurethane material comprising them of the surface layer (1).

12. Polyurethane object according to Claim 10, wherein the layer (1) comprising the carbon particles has a specific resistance of from ≥ 10⁻³ ohm cm to ≤ 10⁸ ohm cm at the surface.

13. Polyurethane object according to Claim 10, wherein the carbon particles are multiwalled carbon nanotubes which are not covalently functionalized and have a diameter of from ≥ 3 nm to ≤ 100 nm.

14. Polyurethane object according to Claim 10 having a first (1) and a second (2) surface layer comprising electrically conductive carbon particles, wherein said first (1) and second (2) surface layers are arranged opposite one another and are separated from one another by a polyurethane layer (3).

15. Polyurethane object according to Claim 10 present as a composite of a support material and the polyurethane surface layer comprising electrically conductive carbon particles.

## Revendications

1. Procédé pour l'introduction de particules conductrices de l'électricité dans une couche superficielle comprenant du polyuréthane, qui comprend les étapes consistant à :
(A) disposer une solution de particules de carbone non agrégées, ayant un diamètre moyen de particule de ≥ 0,3 nm à ≤ 3 000 nm, dans un solvant qui est apte à provoquer le gonflement d'une couche superficielle comprenant du polyuréthane ;
(B) mettre en contact la couche superficielle comprenant du polyuréthane avec la solution des particules de carbone ;
(C) laisser agir la solution des particules de carbone sur la couche superficielle comprenant du polyuréthane pendant une durée qui n'est pas suffisante pour faire passer le polyuréthane en solution ;
(D) mettre fin à l'action de la solution des particules de carbone sur la couche superficielle comprenant du polyuréthane.

2. Procédé selon la revendication 1, dans lequel l'action de la solution des particules de carbone sur la couche superficielle comprenant du polyuréthane a lieu avec utilisation d'ultrasons et/ou de chaleur.

3. Procédé selon la revendication 1, dans lequel les particules de carbone ne sont pas fonctionnalisées par covalence à leur surface.

4. Procédé selon la revendication 1, dans lequel les particules de carbone sont choisies dans le groupe comprenant des nanotubes de carbone, des nanotubes de carbone monofeuillets, des nanotubes de carbone multifeuillets, des nanocornets de carbone, des nano-oignons de carbone, des fullerènes, le graphite, le graphène, des fibres de carbone et/ou le noir de carbone conducteur.

5. Procédé selon la revendication 4, dans lequel les particules de carbone non fonctionnalisés par covalence sont des nanotubes de carbone multifeuillets ayant un diamètre de ≥ 3 nm à ≤ 100 nm.

6. Procédé selon la revendication 1, dans lequel le solvant est choisi dans le groupe comprenant le méthanol, l'éthanol, l'isopropanol, le butanol, l'éthylèneglycol, le propylèneglycol, le butylèneglycol, le glycérol, l'hydroquinone, l'acétone, l'acétate d'éthyle, le trichloréthylène, le trichloréthane, le trichlorométhane, le chlorure de méthylène, la cyclohexanone, le N,N-diméthylformamide, le diméthylsulfoxyde, le tétrahydrofurane, la N-méthyl-2-pyrrolidone, le benzène, le toluène, le chlorobenzène, le styrène, les polyesterpolyols, les polyétherpolyols, des mélanges des solvants précités entre eux et/ou des mélanges des solvants précités avec l'eau.

7. Procédé selon la revendication 1, dans lequel la mise en contact de la couche superficielle comprenant du polyuréthane avec la solution des particules de carbone s'effectue par trempage, application, impression, enduction à la brosse, pulvérisation et/ou enduction par ruissellement.

8. Procédé selon la revendication 1, dans lequel au moins dans l'étape (C) la couche superficielle comprenant du polyuréthane est en partie recouverte par un masque.

9. Couche à base de polyuréthane, comprenant des particules de carbone conductrices de l'électricité et pouvant être obtenue par un procédé selon la revendication 1, la surface supérieure de la couche à base de polyuréthane présentant des saillies et des creux avec une hauteur moyenne des saillies de ≥ 50 nm à ≤ 500 nm et une distance moyenne entre saillies voisines de ≥ 0,5 µm à ≤ 1,5 µm.

10. Article à base de polyuréthane comportant une couche superficielle (1) comprenant des particules de carbone conductrices de l'électricité, pouvant être obtenue par un procédé selon la revendication 1, les particules de carbone se trouvant disposées dans le polyuréthane jusqu'à une profondeur de ≤ 1 µm au-dessous de la surface.

11. Article à base de polyuréthane selon la revendication 10, dans lequel les particules de carbone sont présentes à l'intérieur du matériau polyuréthane, les comprenant, de la couche superficielle (1) en une proportion de ≥ 0,1 % en poids à ≤ 5 % en poids.

12. Article à base de polyuréthane selon la revendication 10, dans lequel la couche (1) comprenant les particules de carbone présente à la surface une résistance spécifique de ≥ 10⁻³ ohm cm à ≤ 10⁸ ohms cm.

13. Article à base de polyuréthane selon la revendication 10, dans lequel les particules de carbone sont des nanotubes de carbone multifeuillets non fonctionnalisées par covalence, ayant un diamètre de ≥ 3 nm à ≤ 100 nm.

14. Article à base de polyuréthane selon la revendication 10, comportant une première couche superficielle (1) et une deuxième couche superficielle (2), comprenant des particules de carbone conductrices de l'électricité ; ladite première couche superficielle (1) et ladite deuxième couche superficielle (2) étant disposées en se faisant face et étant séparées l'une de l'autre par une couche de polyuréthane (3).

15. Article à base de polyuréthane selon la revendication 10, présent sous forme de composite d'un matériau de support avec la couche superficielle à base de polyuréthane comprenant des particules de carbone conductrices de l'électricité.
